# EUROPÄISCHE PATENTSCHRIFT

(11) **EP 0 433 794 B1**
(45) Veröffentlichungstag und Bekanntmachung des Hinweises auf die Patenterteilung: **13.10.1993**
(21) Anmeldenummer: 90123526.7
(22) Anmeldetag: 07.12.1990
(51) Int. Cl.: B62D 25/16

(54) **Kotflügel für Fahrzeuge, insbesondere für die Hinterräder von Sattelzugmaschinen**
Mudguard for vehicles, in particular for the rear wheels of truck tractors
Aile pour véhicules, en particulier pour les roues arrières des tracteurs de semi-remorque

(30) Priorität: 22.12.1989 DE 3942596
(43) Veröffentlichungstag der Anmeldung: 26.06.1991
(73) Patentinhaber: Iveco Magirus Aktiengesellschaft, D-89017 Ulm (DE)
(72) Erfinder: Luczkowski, Peter, W-7904 Erbach-Dellmensingen (DE)
(74) Vertreter: TER MEER STEINMEISTER & PARTNER GbR

(56) Entgegenhaltungen:
- DE-U- 8 533 778

## Beschreibung

Die Erfindung betrifft einen Kotflügel für Fahrzeuge, vorzugsweise für die Hinterräder von Kraftfahrzeugen, insbesondere Zugmaschinen von Sattelanhängern, mit einem am Fahrzeug befestigten vorderen Abschnitt, einem am Fahrzeug befestigten hinteren Abschnitt und einem am vorderen und hinteren Abschnitt lösbar befestigten, einstückigen, im wesentlichen elastischen mittleren Abschnitt, der an seinen vorderen und hinteren stirnseitigen Enden bezüglich der benachbarten Abschnitte geführt einschiebbar ausgebildet ist.

Für die Arretierung eines loslösbaren mittleren Abschnitts bei dreiteiligen Kotflügeln werden im geschlossenen Zustand nach dem bekannten Stand der Technik aufwendige Kunststoff- Schnapp- und -Rastelemente, Gummispanner, Kniehebelgelenk-Verschlußvorrichtungen oder speziell geformte Blechteile verwendet. Witterungsbedingte Einflüsse beeinträchtigen die Funktion, Gummiteile verspröden, Blechteile korrodieren. Durch Korrosion und Schmutz entstehen schwer zu betätigende Gelenkverschlüsse.

Bei einem aus EP-A-0 138 233 bekannten Kotflügel der eingangs genannten Art bestehen die drei hintereinander angeordneten Kotflügelabschnitte aus Kunststoff. Der mittlere Abschnitt ist einteilig ausgebildet und unter den vorderen oder hinteren Abschnitt geführt einschiebbar sowie an seiner dem jeweils anderen Abschnitt zugewandten Ende mit zumindest einem Rastglied versehen, das mit einem Gegenrastglied des anderen Abschnitts zusammenwirkt. Durch Drücken auf den Mittelbereich des mittleren Abschnitts läßt sich das Rastglied lösen und dann der mittlere Abschnitt unter den anderen vorderen bzw. hinteren Abschnitt schieben. Zur Führung und Halterung dienen hierzu an der Unterseite des vorderen bzw. hinteren Abschnitts ausgebildete V-förmig auseinanderstrebende Führungs- und Halterippen, die in Führungschienen der Oberseite des mittleren Abschnitts eingreifen. Rastglied, Gegenrastglied und Führungsausbildung auf der anderen Seite des mittleren Abschnitts sind vergleichsweise aufwendig getroffen.

Aufgabe der Erfindung ist die Verbesserung des vorgenannten Stands der Technik durch Schaffung eines Kotflügels der eingangs genannten Art, welcher sehr einfach aufgebaut und gleichwohl der mittlere Abschnitt schnell und einfach bei zuverlässigem Halt in der befestigten Lage montiert und auch demontiert werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 7.

Wesen der Erfindung ist die Ausbildung eines äußerst einfach zu handhabenden mittleren Abschnitts einfachen Aufbaus insbesondere durch Schaffung von einfachen vorderen und hinteren stirnseitigen formschlüssigen rastfreien Laschen-Steckverbindungen, die einen festen, jedoch lösbaren stirnseitigen Halt an beiden benachbarten Abschnitten ermöglichen und durch Hochbiegen des elastischen mittleren Abschnitts gelöst werden können. Es kann mithin auf komplizierte Rastglieder und Gegenrastglieder wie nach dem Stand der Technik verzichtet werden. Nach einem Einführen ergibt sich ein fester stirnseitiger Halt des mittleren Abschnitts an den benachbarten Abschnitten, der für sämtliche Betriebszustände eines fahrenden Fahrzeugs ausreichend ist, d.h. sich von selbst nicht lösen kann. Die Laschen-Steckverbindungen auf beiden Seiten des mittleren Abschnitts können bevorzugt gleich ausgebildet sein, wodurch sich eine erleichterte Fertigung ergibt.

Zwar kennt man nach dem Stand der Technik gemäß EP-A-0 109 577 (dem Oberbegriffentsprechend) bereits ein elastisches Mittelstück mit vergleichsweise einfach aufgebauten randseitigen Befestigungselementen, die einen Formschluß mit den benachbarten anderen Kotflügelabschnitten ermöglichen. Diese Befestigungselemente, insbesondere nach unten weisende randseitige Stege des mittleren Abschnitts, welche in oben offene Nuten der benachbarten anderen Kotflügelabschnitte eingreifen, sorgen allein nicht für einen betriebssicheren Halt des mittleren Kotflügelabschnitts, der mehr oder weniger nur durch sein Eigengewicht in seiner Nutlage festgehalten wird. Für einen sicheren Halt sind zusätzliche Spannklammern vorgesehen, die den Befestigungsaufwand erhöhen.

Insbesondere ist erfindungsgemäß vorgesehen, daß im befestigten Zustand der Anordnung der mittlere Abschnitt in Richtung seiner Steckverbindungen durch seine Elastizität bzw. Spreizkraft vorgespannt ist. Dadurch ist Spielfreiheit eines befestigten Mittelteils sichergestellt.

Eine besondere Ausführungsform kennzeichnet sich dadurch, daß der mittlere Abschnitt am vorderen und hinteren stirnseitigen Ende jeweils zumindest ein Aufnahmemaul für eine zugeordnete vordere bzw. hintere Lasche der benachbarten Abschnitte aufweist, wobei die Lasche bis an den Boden der Maulöffnung im befestigten Zustand der Anordnung anschlägt. Hierbei ist vorzugsweise vorgesehen, daß die Unterseite des Aufnahmemauls einen verlängerten Steg aufweist.

Um eine Quersicherung des mittleren Abschnitts im befestigten Zustand zu erhalten, weist der mittlere Abschnitt ein im Querschnitt U-förmiges Profil auf, dessen endseitige U-Schenkel die benachbarten rahmenfesten Kotflügelabschnitte fixierend umgreifen.

Für ein einfaches Einschieben sind vorzugsweise die vordersten Enden der rahmenfesten Laschen, welche dem Maulbodenbereich des mittleren Abschnittes zugeordnet sind, abgeschrägt.

Die einzelnen Kotflügelabschnitte, insbesondere der mittlere Abschnitt ist aus Polyurethan gebildet.

Selbstverständlich können Aufnahmemaul und Lasche bzw. Einsteckzunge umgekehrt angeordnet sein, d.h. das Aufnahmemaul an den rahmenfesten Kotflügelabschnitten und die Laschen bzw. Einsteckzungen an den stirnseitigen Enden des mittleren elastischen Abschnitts.

Durch die Erfindung wird mithin ein dreiteiliger Kotflügel aus elastischem Material geschaffen, dessen einschiebbares Mittelteil durch einfache Elemente gelagert werden kann. Die Lagerstellen sind einfach überlagerte Flächen der benachbarten Abschnitte, die das Mittelteil im geschlossenen Zustand des kompletten Kotflügels zuverlässig halten. Weitere aufwendige mechanische Verschlüsse, Rasteingriffsmittel oder dergl. sind entbehrlich.

Die Erfindung wird nachfolgend anhand eines Ausführungsbeispiels unter Bezugnahme auf die beigefügte Zeichnung näher erläutert; es zeigen:
- Fig. 1: in schematischer Seitenansicht einen dreiteiligen Kotflügel mit der Erfindung bei unbefestigtem mittleren Abschnitt,

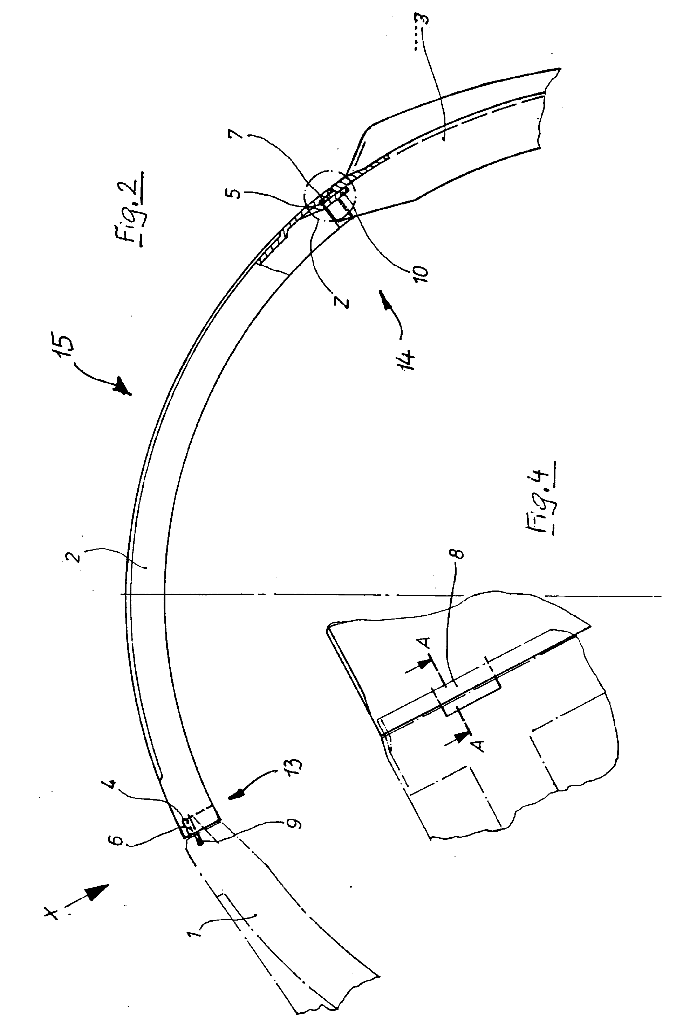

- Fig. 2: den Kotflügel im Bereich des mittleren Abschnitts nach Fig. 1 in seiner befestigten Lage,
- Fig. 3: den Kotflügel nach Fig. 2 in einer schematischen Draufsicht,
- Fig. 4: eine Einzelheit der Fig. 2 gesehen in Richtung X, und
- Fig. 5: die Einzelheit Z der Fig. 2 längs eines Schnittes A-A der Fig. 4.

Der in der Zeichnung dargestellte Kotflügel (15) ist für die Hinterräder eines Sattelschleppers vorgesehen und besitzt drei hintereinander angeordnete Abschnitte (1, 2, 3), von denen der vordere Abschnitt (1) und der hintere Abschnitt (3) stabil ausgebildet und an Teilen des Fahrzeugrahmens in an sich bekannter Weise befestigt sind.

Zwischen dem vorderen Abschnitt (1) und dem hinteren Abschnitt (3) befindet sich ein bogenförmiger elastischer mittlerer Abschnitt (2) aus Polyurethan, der im Querschnitt ein U-Profil aufweist. In seiner befestigten Mittellage ist der mittlere Kotflügelabschnitt (2) am hinteren stirnseitigen Ende des vorderen Kotflügelabschnitts (1) sowie am vorderen stirnseitigen Ende des hinteren Kotflügelabschnitts (3) durch rastfreie Steckverbindungen (13 bzw. 14) befestigt.

Die rastfreien Steckverbindungen (13, 14) umfassen insbesondere an den stirnseitigen Enden des mittleren Kotflügelabschnitts (2) ein vorderes Aufnahmemaul (4) bzw. ein hinteres Aufnahmemaul (5), die maßlich mit den Laschen (6 bzw. 7) abgestimmt sind. Im geschlossenen befestigten Zustand des Kotflügels (15) liegen beide rahmenfesten Laschen (6, 7) des Kotflügelvorderabschnitts (1) bzw. des Kotflügelhinterabschnitts (3) im Aufnahmemaul (4 bzw. 5).

Der Überlappungsbereich (8) zwischen dem Aufnahmemaul (4 bzw. 5) und der Lasche (6 bzw. 7) ist so dimensioniert, daß bei Vertikalbeschleunigung eines geschlossenen Kotflügels (15) die vertikalen Kräfte über die tragenden Flächen (8) abgeleitet werden, wobei der mittlere Kotflügelabschnitt (2) in seiner befestigten Lage verbleibt.

Ein Herauswandern des mittleren Abschnitts (2) quer zur Fahrtrichtung ist nicht möglich, da der mittlere Abschnitt (2) ein U-förmiges Profil aufweist und aufgrund des U-förmigen Profils den rahmenfesten vorderen Abschnitt (1) und den rahmenfesten hinteren Abschnitt (3) an den oberen Enden umschließt.

An der Unterseite weist das vordere bzw. hintere Aufnahmemaul (4 bzw. 5) verlängerte untere Stege (9 bzw. 10) auf, wie dies insbesondere der Fig. 5 zu entnehmen ist. Aufgrund der verlängerten Stege (9, 10) des Aufnahmemauls (4, 5) erreicht man eine bessere und leichtere Handhabung beim Einführen der vorderen Lasche (6) bzw. hinteren Lasche (7) in das zugehörige Aufnahmemaul.

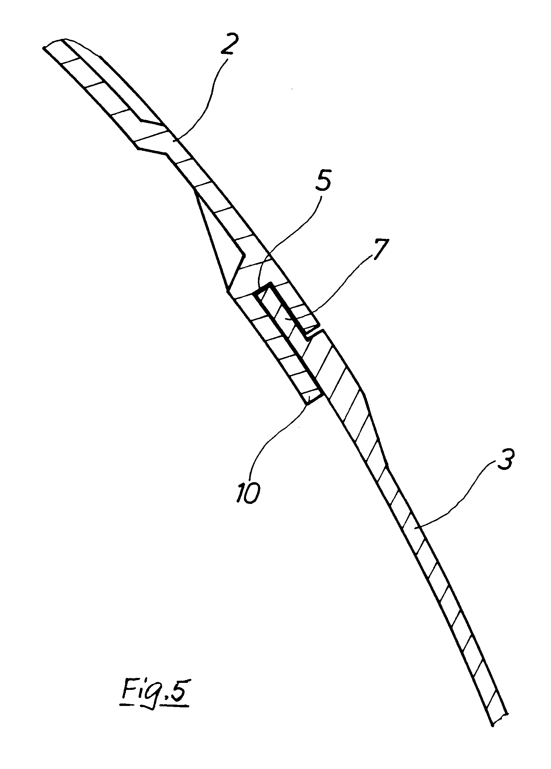

Wie insbesondere der Fig. 3 zu entnehmen ist, weist der mittlere Kotflügelabschnitt (2) an jedem seiner beiden stirnseitigen Enden zwei voneinander beabstandete Aufnahmemaulöffnungen (4 bzw. 5) auf. Anstatt der einzelnen Maulöffnungen kann sich auch über die gesamte Breite des mittleren Abschnitts (2) ein einziges Aufnahmemaul (4 bzw. 5) erstrecken.

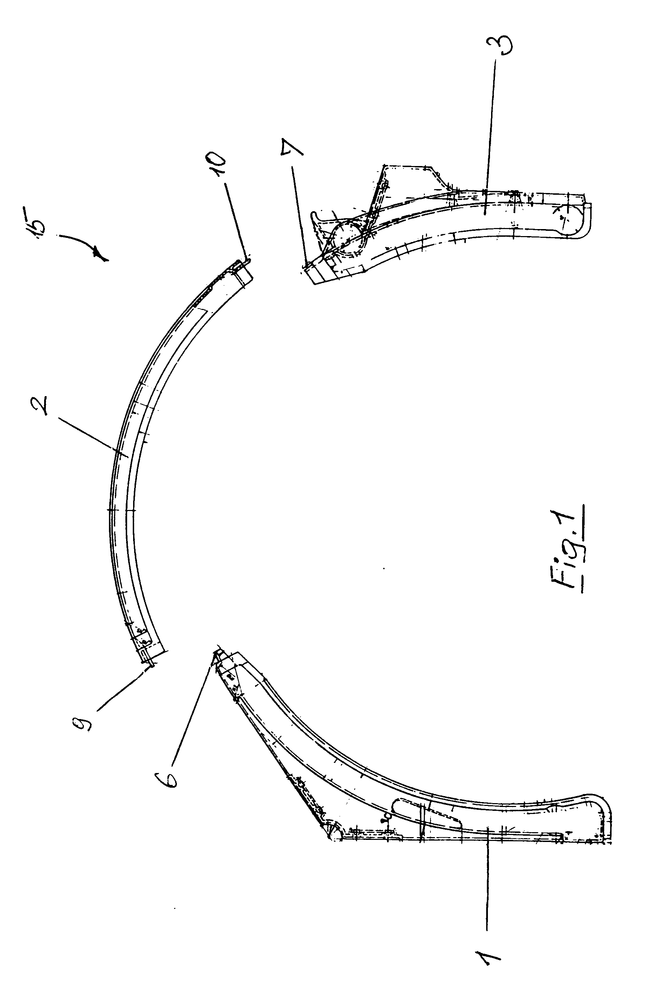

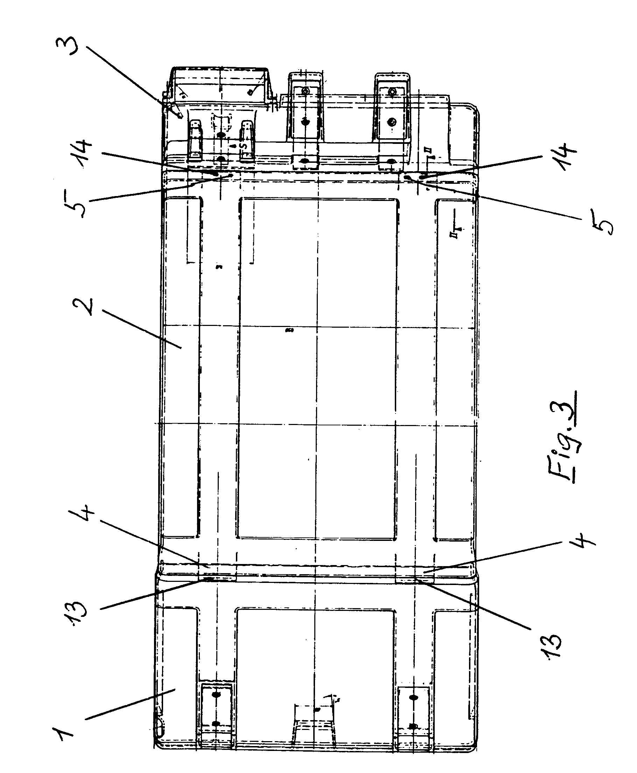

Für eine Befestigung des mittleren Kotflügelabschnitts (2) gemäß Fig. 1 wird der mittlere Abschnitt (2) mit dem Aufnahmemaul (4) an die Lasche (6) des rahmenfesten vorderen Abschnitts (1) angelegt und in das dortige Aufnahmemaul (4) eingeführt. Durch einen leichten Druck in Fahrtrichtung kann der mittlere Abschnitt (2) aufgrund seiner elastischen Ausbildung etwas verformt bzw. gekrümmt werden. Dadurch kann das Aufnahmemaul (5) auf der anderen Stirnseite über die Lasche (7) des rahmenfesten hinteren Abschnitts (3) geführt und der mittlere Abschnitt (2) arretiert werden. Ein Lösen des mittleren Abschnitts (2) aus seiner befestigten Mittellage erfolgt umgekehrt.

## Patentansprüche

1. Kotflügel (15) für Fahrzeuge, vorzugsweise für die Hinterräder von Kraftfahrzeugen, insbesondere Zugmaschinen von Sattelanhängern, mit einem am Fahrzeug befestigten vorderen Abschnitt (1), einem am Fahrzeug befestigten hinteren Abschnitt (3) und einem am vorderen und hinteren Abschnitt (1, 3) lösbar befestigten, einstückigen, im wesentlichen elastischen mittleren Abschnitt (2),
dadurch gekennzeichnet,
daß der mittlere Abschnitt (2) sowohl am vorderen als auch am hinteren stirnseitigen Ende formschlüssige rastfreie Laschen-Steckverbindungen (13, 14) aufweist, die einen festen, jedoch lösbaren stirnseitigen Halt an beiden benachbarten Abschnitten (1, 3) ermöglichen und durch Hochbiegen des elastischen mittleren Abschnitts (2) gelöst werden können.

2. Kotflügel nach Anspruch 1,
dadurch gekennzeichnet,
daß im befestigten Zustand der Anordnung der mittlere Abschnitt (2) in Richtung seiner Steckverbindungen (13,14) durch seine Elastizität bzw. Spreizkraft vorgespannt ist.

3. Kotflügel nach Anspruch 1 oder 2,
dadurch gekennzeichnet,
daß der mittlere Abschnitt (2) am vorderen und hinteren stirnseitigen Ende jeweils zumindest ein Aufnahmemaul (4 bzw. 5) für eine zugeordnete vordere bzw. hintere Lasche (6 bzw. 7) der benachbarten Abschnitte (1, 2) aufweist, wobei die Lasche (6 bzw. 7) bis an den Boden der Maulöffnung (4 bzw. 5) im befestigten Zustand der Anordnung anschlägt.

4. Kotflügel nach Anspruch 3,
dadurch gekennzeichnet,
daß die Unterseite des Aufnahmemauls (4 bzw. 5) einen verlängerten Steg (9 bzw. 10) aufweist.

5. Kotflügel nach einem der Ansprüche 1 bis 4,
dadurch gekennzeichnet,
daß der mittlere Abschnitt (2) ein U-förmiges Querschnittsprofil aufweist, durch das der mittlere Abschnitt (2) im befestigten Zustand der Anordnung in Breitenrichtung bezüglich der benachbarten rahmenfesten Abschnitte (1, 3) fixiert ist.

6. Kotflügel nach einem der Ansprüche 3 bis 5,
dadurch gekennzeichnet,
daß die Laschen (6, 7) im Maulbodenbereich abgeschrägt ausgebildet sind.

7. Kotflügel nach einem der Ansprüche 1 bis 6,
dadurch gekennzeichnet,
daß der mittlere Abschnitt (2) aus Polyurethan gebildet ist.

## Claims

1. Mudguard (15) for vehicles, preferably for the rear wheels of motor vehicles, in particular motor tractors of semitrailers, having a front section (1) fastened to the vehicle, a rear section (3) fastened to the vehicle and a one-piece, essentially flexible middle section (2), which is detachably fastened to the front and rear sections (1, 3), characterised in that the middle section (2) exhibits, both at the front and at the rear face-sided end, positive-locking, catch-free, butt-type plug-in connections (13, 14), which permit a tight, yet releasable face-sided hold on the two adjacent sections (1, 3) and can be released by the flexible middle section (2) being bent upwards.

2. Mudguard according to Claim 1, characterised in that, in the fastened state of the arrangement, the middle section (2) is pre-tensioned in the direction of its plug-in connections (13, 14) by its flexibility or expansion force.

3. Mudguard according to Claim 1 or 2, characterised in that the middle section (2) exhibits respectively, at the front and rear face-sided ends, at least one receiving jaw (4 or 5) for an assigned front or rear fin (6 or 7) of the adjacent sections (1, 2), the fin (6 or 7) butting right against the base of the jaw opening (4 or 5) in the fastened state of the arrangement.

4. Mudguard according to Claim 3, characterised in that the underside of the receiving jaw (4 or 5) exhibits an extended bar (9 or 10).

5. Mudguard according to one of Claims 1 to 4, characterised in that the middle section (2) exhibits a U-shaped cross-sectional profile, by which the middle section (2) is fastened, in the fastened state of the arrangement, in the latitudinal direction relative to the adjacent, frame-fixed sections (1, 3).

6. Mudguard according to one of Claims 3 to 5, characterised in that the fins (6, 7) are of bevelled configuration in the area of the jaw base.

7. Mudguard according to one of Claims 1 to 6, characterised in that the middle section (2) is formed from polyurethane.

## Revendications

1. Aile (15) de véhicules, de préférence pour les roues arrière de véhicules à moteur, en particulier de tracteurs de semi-remorques, comprenant une partie antérieure (1) fixée au véhicule, une partie arrière (3) fixée au véhicule et une partie médiane (2) en une pièce sensiblement élastique, fixée de manière amovible aux parties antérieure et arrière (1, 3), caractérisée en ce que la partie médiane (2) comprend aussi bien sur le côté extrême antérieur que sur le côté extrême arrière des raccords à enfichage (13, 14) à pattes sans encliquetage et à fixation par complémentarité de formes qui permettent une retenue fiable, mais amovible des côtés extrêmes sur les deux parties voisines (1, 3) et qui peuvent être libérés par courbage vers le haut de la partie médiane élastique (2).

2. Aile selon la revendication 1, caractérisée en ce qu'à l'état de fixation de l'ensemble, la partie médiane (2) est sous précontrainte par son élasticité ou sa force d'écartement dans la direction de ses raccords à enfichage (13, 14).

3. Aile selon la revendication 1 ou 2, caractérisée en ce que la partie médiane (2) comprend sur chacun des côtés extrêmes antérieur et arrière au moins une bouche de logement (4 ainsi que 5) destinée à une patte correspondante antérieure et arrière (6 ainsi que 7) des parties voisines (1, 2), la patte (6 ainsi que 7) butant contre le fond de l'ouverture de la bouche (4, 5) à l'état de fixation de l'ensemble.

4. Aile selon la revendication 3, caractérisée en ce que le côté inférieur de la bouche de logement (4 ainsi que 5) comporte une languette allongée (9 ainsi que 10).

5. Aile selon l'une des revendications 1 à 4, caractérisée en ce que la partie médiane (2) a un profil transversal en étrier qui immobilise la partie médiane (2) à l'état de fixation de l'ensemble dans la direction de la largeur sur les parties voisines (1, 3) solidaires du châssis.

6. Aile selon l'une des revendications 3 à 5, caractérisée en ce que les pattes (6, 7) sont chanfreinées dans la zone du fond de la bouche.

7. Aile selon l'une des revendications 1 à 6, caractérisée en ce que la partie médiane (2) est en polyuréthanne.
